# EUROPÄISCHE PATENTSCHRIFT

(11) **EP 2 373 492 B1**
(45) Veröffentlichungstag und Bekanntmachung des Hinweises auf die Patenterteilung: **04.03.2015**
(21) Anmeldenummer: 09774638.2
(22) Anmeldetag: 11.12.2009
(51) Int. Cl.: B42D 25/00, B42D 15/00

(54) **VERFAHREN ZUR HERSTELLUNG EINES SICHERHEITSELEMENTS SOWIE TRANSFERFOLIE**
METHOD FOR PRODUCING A SECURITY ELEMENT AND TRANSFER FILM
PROCÉDÉ DE FABRICATION D'UN ÉLÉMENT DE SÉCURITÉ ET FILM DE TRANSFERT

(30) Priorität: 16.12.2008 DE 102008062149
(43) Veröffentlichungstag der Anmeldung: 12.10.2011
(73) Patentinhaber: OVD Kinegram AG, 6301 Zug (CH)
(72) Erfinder: STREB, Christina, 5646 Abtwill (CH); EPP, Sascha, Mario, CH-6312 Steinhausen (CH); HANSEN, Achim, CH-6300 Zug (CH)
(74) Vertreter: Zinsinger, Norbert
(86) Internationale Anmeldenummer: PCT/EP2009/008871
(87) Internationale Veröffentlichungsnummer: WO 2010/072339

(56) Entgegenhaltungen:
- EP-A- 0 420 261
- WO-A-2005/108108
- WO-A2-2007/048563
- DE-A1- 10 013 410
- DE-A1- 19 940 790

## Beschreibung

Die Erfindung betrifft ein Verfahren zur Herstellung eines Sicherheitselements sowie eine Transferfolie, insbesondere eine Heißprägefolie, zum Transfer eines oder mehrerer Mehrschichtkörper auf ein Zielsubstrat.

Zur Applizierung eines Sicherheitselements auf Sicherheitsdokumente, beispielsweise Reisepässe, Kreditkarten oder Banknoten, werden u.a. Transferfolien, insbesondere Heißprägefolien eingesetzt. So beschreibt beispielsweise die DE 100 13 410 A1 die Herstellung eines Mehrschichtkörpers, welcher einen Ausweis, eine Kreditkarte oder dergleichen bildet, bei dem zwischen zwei benachbarten Decklagen ein Sicherheitselement eingebracht wird, das von der Dekorlage einer Heißprägefolie gebildet wird. Das Sicherheitselement umfasst eine transparente Lackschicht, in die eine beugungsoptisch wirksame Struktur abgeformt ist. Die transparente Lackschicht ist weiter mit einer die Reflexion erhöhenden Schicht versehen, bei der es sich um eine Metallschicht oder eine dielektrische Schicht handelt. Weiter weist das Sicherheitselement eine Kleberschicht auf, mittels der das Sicherheitselement an der unteren Decklage festgelegt ist. Hierzu wird die Heißprägefolie auf die untere Decklage aufgelegt und mittels eines Prägestempels unter Einwirkung von Wärme und Druck in dem Bereich auf die Decklage gepresst, in dem die Dekorlage der Heißprägefolie auf die Decklage zu transferieren ist. Beim Abziehen des Trägerfilms der Heißprägefolie haftet dieser Teilbereich der Dekorlage weiter an der unteren Decklage fest, die übrigen Teilbereiche der Dekorlage werden zusammen mit dem Trägerfilm abgezogen.

Bei einer derartigen Übertragung der Dekorlage einer Heißprägefolie von einem Trägerfilm auf ein Substrat wird die Dekorlage der Prägefolie entlang der Grenzlinie, die den zu übertragenden Teilbereich der Dekorlage definiert, zerrissen. Dies kann insbesondere bei der Verwendung von Transferfolien mit dickeren Schichten und Schichten mit speziellen Eigenschaften, beispielsweise Schichten mit besonders hoher Zähigkeit, zu Randausfransungen führen.

DE 199 40 790 A1 offenbart eine bekannte Transferfolie.

WO 20071048 563 A2 offenbart ein Verfahren und eine Transferfolie gemäß dem Oberbegriff von Anspruch 1 bzw. Anspruch 14.

Der Erfindung liegt nun die Aufgabe zugrunde, ein verbessertes Verfahren zur Herstellung eines Dekorelements bzw. eines Sicherheitselements sowie eine verbesserte Transferfolie anzugeben.

Diese Aufgabe wird von einem Verfahren zur Herstellung eines Sicherheitselements gelöst, wobei bei dem Verfahren eine Grundfolie bereit gestellt wird, die eine erste Trägerfolie und eine ein- oder mehrschichtige Dekorlage aufweist, die die Trennung der Dekorlage von der ersten Trägerfolie ermöglicht, wobei auf die von der Dekorlage abgewandte Oberfläche der ersten Trägerfolie eine erste Kleberschicht aufgebracht wird und eine zweite Trägerfolie aufgebracht wird derart, dass die erste Kleberschicht zwischen der ersten Trägerfolie und der zweiten Trägerfolie angeordnet ist, wobei die erste Kleberschicht in einem ersten Bereich, der mindestens einen ersten Teilbereich der Grundfolie zumindest teilweise überdeckt, aktiviert wird, und in einem an diesen Bereich angrenzenden zweiten Bereich die erste Kleberschicht jedoch nicht aktiviert, nicht vorgesehen, lediglich teilweise vorgesehen oder deaktiviert wird, wobei die erste Trägerfolie entlang der den mindestens einen ersten Teilbereich definierenden und den mindestens einen ersten Teilbereich von einem zweiten Teilbereich der Grundfolie trennenden Grenzlinie mindestens teilweise durchtrennt wird, und wobei ein den zweiten Teilbereich umfassender zweiter Teil der Grundfolie von der zweiten Trägerfolie abgezogen wird und in dem mindestens einen ersten Teilbereich der Grundfolie aufgrund der aktivierten ersten Kleberschicht an der zweiten Trägerfolie haftet und ein den mindestens einen ersten Teilbereich umfassender erster Teil der Grundfolie auf der zweiten Trägerfolie verbleibt. Diese Aufgabe wird weiter von einer Transferfolie, insbesondere einer Heißprägefolie, zum Transfer eines oder mehrerer Mehrschichtkörper auf ein Zielsubstrat gelöst, wobei die Transferfolie eine Grundfolie aufweist, welche eine erste Trägerfolie und eine ein- oder mehrschichtige Dekorlage aufweist, die die Trennung der Dekorlage von der ersten Trägerfolie ermöglicht, wobei die Transferfolie weiter eine zweite Trägerfolie und auf die von der Dekorlage abgewandten Oberfläche der ersten Trägerfolie aufgebrachte erste Kleberschicht aufweist und die erste Kleberschicht zwischen der ersten Trägerfolie und der zweiten Trägerfolie angeordnet ist, wobei die erste Kleberschicht in einem mindestens einen ersten Teilbereich der Grundfolie zumindest teilweise überdeckenden ersten Bereich aktiviert ist, so dass die Grundfolie in dem mindestens einen ersten Teilbereich an der zweiten Trägerfolie haftet und in einem an den mindestens einen ersten Teilbereich angrenzenden zweiten Teil jedoch nicht aktiviert, nicht vorgesehen, lediglich teilweise vorgesehen oder deaktiviert ist, und wobei die erste Trägerfolie entlang der den mindestens einen ersten Teilbereich definierenden und den mindestens einen ersten Teilbereich von einem zweiten Teilbereich der Grundfolie trennenden Grenzlinien durchtrennt und ein den zweiten Teilbereich umfassender Teil der Grundfolie von der zweiten Trägerfolie abgezogen ist.

Mittels der Erfindung ist es möglich, ein Sicherheitselement bereit zu stellen, welches mittels eines üblichen Transferverfahrens auf ein Sicherheitsdokument, beispielsweise eine Banknote oder ein ID-Dokument, transferiert werden kann und welches ein durch das Brechen der Dekorlage im Randbereich des transferierten Mehrschichtkörpers entstehendes "Ausfransen" vermeidet. Weiter ist es möglich, dass die Haft- und Struktureigenschaften der Dekorlage im wesentlichen unabhängig von den Anforderungen des Transfer-Prozesses gewählt werden können und so beispielsweise die optischen Eigenschaften, die Beständigkeit gegenüber Umwelteinflüssen sowie die Sicherheit gegenüber Nachahmung und Manipulation des Sicherheitselements weiter verbessert werden können. Weiter zeichnet sich das erfindungsgemäße Verfahren dadurch aus, dass die Passergenauigkeit, mit der Sicherheitselemente auf ein Zielsubstrat transferiert werden können, weiter verbessert wird.

Zudem können unterschiedliche Formen der Transferfolie mit einer Stempelform übertragen werden. Die äußere Form des Patches muss nicht mit der äußeren Form des Heißprägestempels übereinstimmen. Vorzugsweise wird hierbei der Heißprägestempel größer als der zu transferierende Teil der Grundfolie gewählt. Beispielsweise wird ein Patch in Sternform mit einem runden, größeren Stempel übertragen. Neben einem Heißprägestempel, mit dem eine Heißprägung mittels Prägedruck und Wärme durchgeführt wird, kann auch ein Ultraschallprägestempel mit entsprechend gestaltetem Gegendrucklager Anwendung finden, mit dem eine Heißprägung mittels Prägedruck und Ultraschall als alternative Energieform durchgeführt wird.

Vorteilhafte Ausgestaltungen der Erfindung sind in den Unteransprüchen bezeichnet.

Beispielsweise weist die Grundfolie eine zwischen der ersten Trägerfolie und der Dekorlage angeordnete Ablöseschicht auf. Weiter ist es auch möglich, dass das Material bzw. die Oberflächenbeschaffenheit der ersten Trägerfolie und der der ersten Trägerfolie zugewandten Schicht der Dekorlage so gewählt sind, dass die Dekorlage von der ersten Trägerfolie ablösbar ist. Hierdurch wird ermöglicht, dass mittels der erfindungsgemäßen Transferfolie ein Teilbereich eines Folienkörpers auf ein Zielsubstrat appliziert werden kann, der lediglich einen Teilbereich der Dekorlage und - optional - eine Kleberschicht umfasst und nicht den zugeordneten Teilbereich der ersten Trägerfolie mit umfasst. Dies ist insbesondere dann von Vorteil, wenn dünne und mechanische in sich nicht stabile Schichtlagen auf das Zielsubstrat transferiert werden sollen.

Beispielsweise ist zwischen der ersten Trägerfolie und der Dekorlage keine Ablöseschicht enthalten. Gemäß dieser Ausführungsform wird die erste Kleberschicht und eine zwischen der Dekortage und dem Zielsubstrat angeordnete zweite Kleberschicht so gewählt, dass die durch die aktivierte erste Kleberschicht zwischen der ersten Trägerfolie und der zweiten Trägerfolie bewirkte Klebekraft geringer als die zwischen der Dekorlage und dem Zielsubstrat durch die aktivierte zweite Kleberschicht bewirkte Klebekraft ist. Hierdurch ist es möglich, nach Aktivieren der zweiten Kleberschicht die zweite Trägerfolie von dem ersten Teilbereich der Grundfolie abzuziehen und damit den gesamten ersten Teilbereich der Grundfolie, d. h. Dekorlage und erste Trägerschicht auf das Zielsubstrat mittels eines Transferprozesses zu applizieren. Mittels des erfindungsgemäßen Verfahrens ist es somit möglich, mechanisch stabile Folienkörper auf ein Zielsubstrat zu transferieren. Hierbei ist es weiter auch möglich, diese Folienkörper nicht nur in Form eines Streifens, sondern in beliebiger Formgebung, beispielsweise als Patch, auf eine Banknote zu transferieren.

Besonders vorteilhaft ist hierbei, den Folienkörper auf ein Fenster einer Banknote zu transferieren und das Fenster damit ganz oder teilweise zu verschließen bzw. zu bedecken. Hierdurch können Sicherheitselemente mit Durchsichtseigenschaften (see through), mit unterschiedlichen Bildern in Aufsicht und Durchsicht, mit unterschiedlichen Bildern bei Betrachtung von Vorderseite und Rückseite des Substrates oder mit Moirébildern Verwendung finden. Auch Kombinationen verschiedener optischer Effekte sind möglich. Unter den Oberbegriff Fenster sollen transparente oder semitransparente Bereiche eines Substrates und/oder Substrate mit einem oder mehreren Löchern oder mit einer oder mehreren Aussparungen fallen.

So ist es möglich, die Formgebung der Folienkörper in ihren Längserstreckungen geringer zu wählen, und so die Verformung der Banknote durch unterschiedliche Ausdehnung des Papiers und der Folie aufgrund der geringeren versiegelten Fläche zu minimieren. Der den Bereich des Fensters überdeckende Teil des Sicherheitselements kann dabei sowohl Teile der 2. Kleberschicht oder keinen Kleber aufweisen, mit einem Lack teil- oder ganzflächig beschichtet oder teil- oder ganzflächig bedruckt sein.

Um die Verformung der Banknote durch unterschiedliche Ausdehnung des Papiers und der Folie noch weiter zu minimieren, ist es weiterhin von Vorteil, auf der dem Folienkörper gegenüberliegenden Seite des Zielsubstrats eine Versiegelungsschicht aufzubringen, die vorzugsweise eine ähnliche oder gleiche Flächenausdehnung wie der Folienkörper aufweist und weitgehend mit dem Folienkörper überlappend angeordnet ist, sodass von dem Folienkörper und der Versiegelungsschicht das Zielsubstrat auf beiden Seiten gleichermaßen bedeckt ist. Die Dicke bzw. Stärke der Versiegelungsschicht kann gleich der Dicke bzw. Stärke des Folienkörpers sein oder dazu unterschiedlich sein. Die äußere Umrissform der Folienkörper auf den gegenüberliegenden Seiten des Zielsubstrats kann dabei unterschiedlich sein. Die Versiegelungsschicht kann dabei durch einen Versiegelungs-Folienkörper oder durch eine Versiegelungs-Lackschicht gebildet sein. Die Versiegelungsschicht soll vor allem die das Fenster umgebende Bereiche des Zielsubstrats versiegeln, kann aber auch im Bereich des Fensters vorgesehen sein. Beispielsweise kann die Versiegelungsschicht entweder vor dem Einbringen des Fensters, beispielsweise durch Stanzen oder Schneiden, aufgebracht werden und beim Einbringen des Fensters mit dem Zielsubstrat gemeinsam durchtrennt und entfernt werden. Eine alternative Variante ist das Aufbringen der Versiegelungsschicht nach dem Einbringen des Fensters, sodass die Versiegelungsschicht auch die freie Rückseite des Folienkörpers im Bereich des Fensters bedeckt. Die Versiegelungsschicht kann dabei insbesondere die senkrechten Schnittkanten des Fensters ebenfalls versiegeln, um auch dort das Eindringen von Feuchtigkeit zu verhindern.

Die Versiegelungsschicht kann ebenso wie der Folienkörper Sicherheitselemente aufweisen, die sich mit Sicherheitselementen des Folienkörpers überlagern können, sodass mehrere Sicherheitselemente in Kombination insbesondere optische Effekte erzeugen können.

Weiter ist es auch möglich, durch die Gestaltung der Umrissform des transferierten Folienkörpers ein weiteres Sicherheitsmerkmal bereitzustellen. Beispielsweise kann die Umrissform filigrane und/oder kleinteilige Motive aufweisen. Die Umrissform des transferierten Folienkörpers kann dabei ähnlich der Umrissform des Fenster oder davon verschieden sein.

Es hat sich bewährt, dass die erste Kleberschicht auf die erste Trägerfolie aufgebracht wird und sodann die zweite Trägerfolie auf die erste Kleberschicht aufgebracht wird. Es ist jedoch auch möglich, dass die erste Kleberschicht auf die zweite Trägerfolie aufgebracht wird und sodann der Folienkörper umfassend die zweite Trägerfolie und die erste Kleberschicht auf die erste Trägerfolie aufgebracht wird und so die erste Kleberschicht unter Zuhilfenahme der zweiten Trägerfolie auf die erste Trägerfolie aufgebracht wird.

Gemäß einer bevorzugten Ausführungsform der Erfindung wird als erste Kleberschicht eine durch elektromagnetische Strahlung aktivierbare Kleberschicht, insbesondere eine Kleberschicht bestehend aus einem UV-aktivierbaren Kleber verwendet, der durch Bestrahlung mit UV-Licht aktiviert werden kann. Hierdurch wird zum einen der Vorteil erzielt, dass die Aktivierung der ersten Kleberschicht in dem ersten Bereich zielgenau gesteuert werden kann. Weiter hat sich gezeigt, dass bei Verwendung einer derartigen Kleberschicht ein Ablösen der ersten Trägerfolie von der zweiten Trägerfolie während eines nachfolgenden Transfer-Prozesses sicher verhindert werden kann und auch so das Transferergebnis weiter verbessert werden kann.

Vorzugsweise wird die erste Kleberschicht vollflächig sowohl im mindestens einen ersten Teilbereich als auch im zweiten Teilbereich auf die der Dekorschicht abgewandten Oberfläche der Trägerfolie aufgebracht. Die Aktivierung der ersten Kleberschicht im ersten Bereich erfolgt hierbei im Folgenden dann vor Abziehen des zweiten Teils der Grundfolie. Die erste Kleberschicht kann hierbei beispielsweise mittels eines Druckverfahrens, beispielsweise Tiefdruck oder Siebdruck, aber auch mittels Aufgießen, Aufsprühen oder Aufrakeln auf die erste Trägerfolie aufgebracht werden.

Die erste Kleberschicht wird vorzugsweise nach Aufbringen der zweiten Trägerfolie durch Bestrahlung im ersten Bereich aktiviert, so dass die zweite Trägerfolie im ersten Bereich an der ersten Trägerfolie haftet. Das Material der ersten Kleberschicht wird hierbei in Bezug auf die erste Trägerfolie und die zweite Trägerfolie vorzugsweise so gewählt, dass die Haftung zwischen erster Trägerfolie und zweiter Trägerfolie nach Aktivierung der ersten Kleberschicht auch bei Raumtemperatur (20 °C) höher als die durch die Ablöseschicht vermittelte Haftung zwischen Dekorlage und erster Trägerfolie ist. Weiter ist das Material der ersten Kleberschicht in Bezug auf die erste Trägerfolie und die zweite Trägerfolie vorzugsweise so gewählt, dass die Haftung zwischen der ersten Trägerfolie und der zweiten Trägerfolie bei nicht aktivierter erster Kleberschicht geringer als die durch die Ablöseschicht vermittelte Haftung zwischen erster Trägerfolie und Dekorlage sowohl bei Zimmertemperatur (20 °C) als bei Prägetemperatur (180 °C) ist.

Weiter hat es sich als vorteilhaft erwiesen, dass die Haftungseigenschaften zwischen der ersten Kleberschicht und erster und/oder zweiter Trägerfolie durch Aufbringen von Primern, Haftvermittlern oder durch Corona-, Flamm-, oder Plasmabehandlung der ersten bzw. zweiten Trägerfolie angepasst werden.

Beispielsweise wird die erste Kleberschicht von einer in Richtung der von der Dekorschicht abgewandten Seite der zweiten Trägerfolie beabstandet angeordneten Strahlungsquelle bestrahlt. Die Strahlungsquelle ist hierbei vorzugsweise mehr als 10 mm von der zweiten Trägerfolie beabstandet angeordnet. Als Strahlungsquelle wird vorzugsweise eine UV-Strahlungsquelle verwendet, welche die erste Kleberschicht mit kolliminiertem Licht, vorzugsweise mit UV-Licht, belichtet. Als Strahlungsquelle eignen sich so beispielsweise UV-Lampen mit einem nachgeschalteten Kollimator oder auch ein Laser.

Durch eine derartige Belichtung der ersten Kleberschicht ist es möglich, die Belichtung der ersten Kleberschicht unabhängig von der Ausgestaltung der Dekorlage der Grundfolie zu wählen. Vorzugsweise besteht die zweite Trägerfolie hierbei aus einem Material, welches für den Wellenlängenbereich der für die Belichtung verwendeten Strahlungsquelle weitgehend transparent ist.

Eine selektive Belichtung der ersten Kleberschicht in den gewünschten Bereichen, beispielsweise die selektive Bestrahlung der ersten Kleberschicht in dem ersten Bereich zur Aktivierung der ersten Kleberschicht in dem ersten Bereich, kann durch eine entsprechende Ansteuerung der Strahlungsquelle oder durch Anordnung einer Belichtungsmaske in dem Strahlengang zwischen der Strahlungsquelle und der ersten Kleberschicht erzielt werden.

Weiter ist es auch möglich, die erste Kleberschicht durch Belichtung im zweiten Bereich zu deaktivieren. So ist es beispielsweise möglich, einen entsprechenden Kleber für die erste Kleberschicht zu verwenden, der beispielsweise mittels UV-Strahlung deaktivierbar ist. Weiter ist es auch möglich, einen UV-aktivierbaren Kleber für die erste Kleberschicht zu verwenden, der bei Bestrahlung mit UV-Licht aushärtet, und die erste Kleberschicht vor Aufbringen der zweiten Trägerfolie im zweiten Bereich zu bestrahlen. Die erste Kleberschicht wird somit vor Aufbringung der zweiten Trägerfolie im zweiten Bereich ausgehärtet, so dass nach Aufbringen der zweiten Trägerfolie ein Anhaften der zweiten Trägerfolie im zweiten Bereich nicht mehr möglich ist, da die erste Kleberschicht in diesem Bereich bereits ausgehärtet und damit deaktiviert wurde.

Beispielsweise wird als Strahlungsquelle ein Laser verwendet, der so gesteuert wird, dass die erste Kleberschicht im ersten Bereich, nicht jedoch im zweiten Bereich bestrahlt wird und/oder im zweiten Bereich, nicht jedoch im ersten Bereich bestrahlt wird. Dies kann beispielsweise durch entsprechende Ansteuerung eines die Position des Lasers oder den Ablenkwinkel des Laserstrahls bestimmenden Stellglieds erzielt werden.

Beispielsweise wird in dem Strahlengang zwischen Strahlungsquelle und erster Kleberschicht eine Belichtungsmaske angeordnet, welche so ausgeformt und angeordnet ist, dass die erste Kleberschicht im ersten Bereich, nicht jedoch im zweiten Bereich bestrahlt wird oder die erste Kleberschicht im zweiten Bereich, nicht jedoch im ersten Bereich bestrahlt wird. Die Belichtungsmaske kann hierbei beispielsweise Teil eines Trommel- oder Bandbelichters sein, durch den die Folienbahn gebildet wird, aus zweiter Trägerfolie, erster Kleberschicht, erster Trägerfolie, Ablöseschicht und Dekorlage geführt wird.

Beispielsweise wird die Dekorschicht zur Steuerung der Bestrahlung der ersten Kleberschicht verwendet.

Hierzu wird vorzugsweise die erste Kleberschicht von einer in Richtung der von der ersten Trägerfolie abgewandten Seite der Dekorschicht angeordneten und von der Dekorschicht beabstandet angeordneten Strahlungsquelle bestrahlt. Die erste Dekorschicht ist damit im Strahlengang zwischen Strahlungsquelle und erster Kleberschicht angeordnet. Vorzugsweise weist die Dekorschicht eine opake, im ersten oder zweiten Bereich vorgesehene und in dem zweiten bzw. dem ersten Bereich nicht vorgesehene Schicht auf, welche als Maskierungsschicht zur Steuerung der Bestrahlung der ersten Kleberschicht verwendet wird. So ist es beispielsweise möglich, eine metallische Reflexionsschicht der Dekorschicht zusätzlich als Maskierungsschicht zur Steuerung der Bestrahlung der ersten Kleberschicht zu verwenden. Hierdurch ist es möglich, die Belichtung der ersten Kleberschicht passergenau zum Design der Dekorschicht zu steuern.

Vorzugsweise wird in einem ersten Bestrahlungsschritt die erste Kleberschicht vor Aufbringen der zweiten Trägerfolie von einer in Richtung der von der ersten Trägerfolie abgewandten Seite der Dekorschicht angeordneten und von der Dekorschicht beabstandet angeordneten Strahlungsquelle durch die als Maskierungsschicht wirkende Dekorschicht bestrahlt und in dem zweiten Bereich deaktiviert. In einem zweiten Bestrahlungsschritt wird die erste Kleberschicht sodann nach Aufbringen der zweiten Trägerfolie von einer in Richtung der von der ersten Trägerfolie abgewandten Seite der zweiten Trägerfolie angeordneten und von der zweiten Trägerfolie beabstandet angeordneten Strahlungsquelle bestrahlt und in dem ersten Bereich aktiviert.

Die Belichtung der ersten Kleberschicht kann - wie oben beschrieben - einstufig erfolgen. Es ist jedoch auch möglich, dass die Belichtung mehrstufig erfolgt. So ist es beispielsweise möglich, dass in einem ersten Belichtungsschritt die Kleberschicht zwar aktiviert wird, aber noch kein vollständiges Aushärten des Klebers erfolgt. Nach Abziehen des zweiten Teils der Grundfolie wird die verbleibende Folie mit der zweiten Trägerfolie und dem ersten Teil der Grundfolie sodann nachbestrahlt, wobei die erste Kleberschicht vollständig aushärtet.

Gemäß einer weiteren bevorzugten Ausführungsform der Erfindung weist die Dekorlage Marken auf, die zur Bestimmung des ersten und zweiten Bereiches der ersten Kleberschicht und/oder zur Bestimmung der ersten und zweiten Teilbereiche der Grundfolie verwendet werden können. Diese Marken stellen somit Registermarken dar. Die Marken können aus einem Druckstoff, aus einem Oberflächenrelief, aus einem magnetischen oder einem elektrisch leitfähigen Stoff ausgeformt sein. Es kann sich bei den Marken so beispielsweise um optisch auslesbare Registermarken handeln, die sich durch ihren Farbwert, ihre Opazität oder ihre Reflexionseigenschaften von dem Hintergrund unterscheiden. Es kann sich bei den Marken auch um eine makroskopische oder diffraktive Reliefstruktur handeln, die das einfallende Licht in einem vorgegebenen Winkelbereich ablenkt und sich durch diese Eigenschaften von dem Hintergrundbereich optisch unterscheiden. Es kann sich bei den Registermarken aber auch um mittels eines magnetischen oder eines die elektrische Leitfähigkeit erfassenden Sensors erfassbare Registermarken handeln. Die Marken werden erfasst, beispielsweise mittels eines optischen Sensors und mittels der Marken wird sodann die Durchtrennung der Trägerfolie, die Aktivierung der ersten Kleberschicht, die Deaktivierung der ersten Kleberschicht und/oder das Aufbringen der ersten Kleberschicht gesteuert. So weist die Dekorlage beispielsweise optisch auslesbare Registermarken auf, welche die Bestrahlung der ersten Kleberschicht und vorzugsweise auch das Durchtrennen der ersten Trägerschicht entlang der Grenzlinie zwischen dem mindestens einen ersten Teilbereich und dem zweiten Teilbereich steuert. Auch hierdurch ist eine registergenaue Aktivierung sowohl der ersten Kleberschicht als auch eine registergenaue Durchtrennung der Trägerfolie zum Design der Dekorlage möglich.

Die Marken sind vorzugsweise im zweiten Teilbereich der Grundfolie angeordnet. Die Marken können hierbei beispielsweise als Linien oder Streifen ausgeformt sein, welche vorzugsweise quer zur Längsrichtung der Folienbahn verlaufen, welche die Grundfolie ausbildet. Die Marken sind hierbei vorzugsweise zwischen zwei ersten Bereichen der Grundfolie angeordnet.

Vorzugsweise sind weiter jedem ersten Teil der Grundfolie ein oder mehrere Registermarken zugeordnet.

Weiter ist es auch möglich, dass die erste Kleberschicht von einer Heißkleberschicht oder von einer durch Druck aktivierbaren Kleberschicht gebildet wird.

Weiter ist es auch möglich, dass die erste Kleberschicht von einer latent reaktiven Kleberschicht, vorzugsweise von einer latent reaktiven Heißkleberschicht gebildet wird. Bei einer latent reaktiven Kleberschicht handelt es sich um eine Kleberschicht, die nach Aktivierung noch nicht vollständig ausgehärtet ist und deren vollständige Aushärtung und damit Entwicklung der vollen Klebekraft erst nach einer vordefinierten Zeitdauer ab Aktivierung unter vordefinierten Umweltbedingungen erreicht wird. Handelt es sich beispielsweise um eine latent reaktive Heißkleberschicht oder um einen latent reaktive Kaltkleberschicht, so wird die Kleberschicht in einem ersten Schritt durch Temperatur und/oder Druck aktiviert und erzielt hierbei zwischen 10% und 90% der maximalen Klebekraft. Nach einer von der Kleberzusammensetzung abhängigen, vorbestimmten Zeit, beispielsweise 10 Minuten bis 72 Stunden härtet die Kleberschicht dann vollständig aus und entwickelt ihre volle Klebekraft. So wird beispielsweise nach Abziehen des zweiten Teils der Grundfolie die verbleibende Folie mit der zweiten Trägerfolie und dem ersten Teil der Grundfolie über eine vordefinierte Zeit bei Raumtemperatur und gegebenenfalls erhöhter Temperatur zur Aushärtung der latenten reaktiven Kleberschicht gelagert und so ein vollständiges Aushärten der latent reaktiven Kleberschicht erzielt. Unter Aktivierung der ersten Kleberschicht ist insbesondere in diesem Zusammenhang eine Einwirkung auf die Kleberschicht zu verstehen, die die Kleberschicht veranlasst, eine chemische Reaktion auszulösen, die zu einer mindestens 10% igen Erhöhung der Klebekraft nach weitgehendem Abschluss der chemischen Reaktion führt.

Als latent reaktiver Klebstoff kann auch ein mikroverkapselter Reaktivklebstoff eingesetzt werden, wie er z.B. unter der Bezeichnung Purbond HCMO von der Firma Ebnöther AG, Sempach, Schweiz erhältlich ist. Ein solcher Klebstoff kann beispielsweise in einem Pulverbeschichtungsverfahren bei Temperaturen zwischen etwa 60 bis 70 C° auf die erste oder zweite Trägerfolie aufgebracht werden, wobei durch die bei dieser Temperatur stattfindende Fixierung eine lackähnliche Kleberschicht gebildet wird, die noch nicht aktiviert ist. Durch Ausübung von Hitze und/oder Druck werden die Mikrokapseln aufgebrochen und der Kleber härtet in diesem Bereich aus.

Gemäß eines bevorzugten Ausführungsbeispiels der Erfindung besteht die erste Kleberschicht aus einem Heißkleber und die erste Kleberschicht wird mittels eines beheizten Prägestempels im ersten, jedoch nicht im zweiten Bereich vor dem Abziehen des zweiten Teils der Grundfolie aktiviert.

Weiter ist es auch vorteilhaft, wenn die erste Kleberschicht im zweiten Bereich mittels Überdrucken mit einer Deaktivierungsschicht deaktiviert wird oder die erste Kleberschicht auf die erste und/oder zweite Trägerfolie im ersten Bereich, nicht jedoch im zweiten Bereich, aufgedruckt wird. Weiter ist es auch möglich, dass die erste Kleberschicht im ersten Bereich und im zweiten Bereich mit unterschiedlicher Flächendichte aufgebracht wird, sodass sich die mittlere Klebekraft pro Flächeneinheit, insbesondere pro cm² im ersten und zweiten Bereich unterscheidet. Vorzugsweise wird bei dieser Ausführungsform die erste Kleberschicht in einem punktförmigen Muster im ersten und/oder zweiten Flächenbereich aufgedruckt, wobei der Unterschied in der Flächendichte durch Variation der Punktgrößen und/oder der Rasterweiten zwischen den Klebepunkten erzielt werden kann. Weiter ist es auch möglich, hierzu im ersten Bereich die Kleberschicht vollflächig aufzubringen und im zweiten Bereich die Kleberschicht lediglich in Form eines punktförmigen Rasters aufzubringen oder im zweiten Bereich die erste Kleberschicht nicht aufzubringen und im ersten Bereich die Kleberschicht in einem punktförmigen Raster aufzubringen. Die mittlere Flächenbelegung der ersten und/oder zweiten Trägerfolie mit der ersten Kleberschicht unterscheidet sich im ersten Bereich von der im zweiten Bereich hierbei um mindestens 15 %. Durch diese Verfahren ist es möglich, mittels eines Druckverfahrens, beispielsweise mittels Tiefdruck, kostengünstig die Vorteile der Erfindung zu erzielen.

Vorzugsweise wird die zweite Trägerfolie mittels zweier gegenüberliegender Rollen auf die Grundfolie auflaminiert.

Beispielsweise wird die Dekorlage, die Ablöseschicht und die erste Trägerfolie entlang der den mindestens einen ersten Teilbereich definierenden Grenzlinie vollständig durchtrennt. Hierbei ist es auch möglich, dass auch die zweite Trägerfolie teilweise mit durchtrennt wird. Vorzugsweise ist hierbei jedoch Sorge dafür zu tragen, dass die zweite Trägerfolie weniger als zu 50 %, vorzugsweise weniger als zu 90 %, durchtrennt wird.

Die Durchtrennung der ersten Trägerfolie erfolgt vorzugsweise mittels Stanzens, beispielsweise mittels einer Rotationsstanze oder mittels eines Lasers.

Vorzugsweise erfolgt das Durchtrennen der ersten Trägerfolie im Register zu der Grenzlinie zwischen dem ersten und zweiten Bereich. Das erfindungsgemäße Verfahren erfordert andererseits keine hohe Registergenauigkeit zwischen dem die erste Kleberschicht strukturierenden Prozess (Belichtung, Bedrucken, Beprägen) und dem Durchtrennungs-Prozess (Stanzen), so dass kostengünstige, großindustrielle Prozesse eingesetzt werden können.

Weiter ist es vorteilhaft, dass der von der Grundfolie, der zweiten Trägerfolie und der ersten Kleberschicht gebildete Folienkörper mittels eines Heißprägestempels bearbeitet wird, der gleichzeitig die erste Kleberschicht im ersten Teilbereich aktiviert und die erste Trägerfolie entlang der dem mindestens einen ersten Teilbereich definierenden Grenzlinie mindestens teilweise durchstanzt. Hierdurch wird eine sehr hohe Registergenauigkeit zwischen diesen beiden Prozessen erzielt und im Weiteren die Anzahl der Bearbeitungsschritte reduziert.

Gemäß einem bevorzugten Ausführungsbeispiel der Erfindung wird nach Abziehen des zweiten Teils der Grundfolie die verbleibende Folie mit der zweiten Trägerfolie und dem ersten Teil der Grundfolie als Transferfolie, insbesondere Heißprägefolie, zur Sicherung von Sicherheitsdokumenten verwendet. Diese Transferfolie stellt ein Sicherheitselement zur Sicherung von Sicherheitsdokumenten bereit.

Weiter ist es möglich, dass diese Transferfolie eine Vielzahl von ersten Teilbereichen aufweist, die jeweils ein Sicherheitselement zur Sicherung eines Sicherheitsdokuments umfassen, das mittels Transfer auf ein Sicherheitsdokument zur Sicherung dieses Sicherheitsdokuments verwendet wird.

Hierzu wird nach Abziehen des zweiten Teils der Grundfolie die verbleibende Folie mit der zweiten Trägerfolie und dem ersten Teil der Grundfolie auf ein Zielsubstrat aufgelegt, ein oder mehrere erste Teilbereiche der Grundfolie auf das Zielsubstrat durch Aktivierung einer zwischen der Dekorlage und dem Zielsubstrat angeordneten Kleberschicht appliziert und der Mehrschichtkörper umfassend die erste Trägerfolie, die erste Kleberschicht und die zweite Trägerfolie von der Dekorlage der applizierten ein oder mehreren ersten Teilbereiche der Grundfolie abgezogen.

Hierzu ist auf der der ersten Trägerfolie abgewandten Seite der Dekorlage eine zweite Kleberschicht aufgebracht, bei der es sich vorzugsweise um eine Heißkleberschicht handelt. Weiter ist es auch möglich, dass es sich bei der zweiten Kleberschicht um eine Kaltkleberschicht oder um eine latent reaktive Heißkleberschicht handelt.

Vorzugsweise werden für die erste Kleberschicht und für die zweite Kleberschicht unterschiedliche Kleber verwendet. So ist es beispielsweise möglich, für die erste Kleberschicht einen Kaltkleber und für die zweite Kleberschicht einen Heißkleber zu verwenden. Falls als erste und als zweite Kleberschicht Heißkleberschichten verwendet werden, ist es vorteilhaft, Heißkleberschichten zu wählen, die unterschiedliche Aktivierungstemperaturen besitzen, wobei die Aktivierungstemperatur der ersten Kleberschicht höher als die der zweiten Kleberschicht ist. Hierdurch wird das Transferergebnis verbessert.

Als zweite Trägerfolie wird vorzugsweise eine transparente Kunststofffolie einer Dicke von mehr als 6µm, vorzugsweise einer Dicke zwischen 6 µm und 250µm verwendet. Es ist jedoch auch möglich, als zweite Trägerfolie ein Papiersubstrat oder Teslin^{®} (matte, weiße, ungestrichene einlagige Polyethylenfolie) zu verwenden. Als erste Trägerfolie wird vorzugsweise eine Kunststofffolie einer Dicke zwischen 4µm und 75µm verwendet.

Gemäß eines bevorzugten Ausführungsbeispiels der Erfindung sind zwei oder mehr erste Teilbereiche vorgesehen und jeder der ersten Teilbereiche ist von dem als zusammenhängender Bereich ausgeformten zweiten Teilbereich umschlossen. Hierdurch wird ein Abziehen des zweiten Bereichs der Grundfolie erleichtert.

Vorzugsweise überdeckt der erste Bereich mindestens 50 % jedes ersten Teilbereichs, weiter bevorzugt mehr als 70 % jedes ersten Teilbereichs. Es ist weiter auch möglich, dass der erste Bereich jeden ersten Teilbereich vollständig überdeckt. Weiter überdeckt der zweite Teilbereich den ersten Bereich bevorzugt um weniger als 5 %. Durch diese Maßnahme wird weiter sichergestellt, dass das Abziehen des zweiten Teils der Grundfolie mit hoher Zuverlässigkeit erfolgen kann.

Die Dekorlage weist gemäß eines bevorzugten Ausführungsbeispiels der Erfindung ein oder mehrere einen optisch variablen Effekt generierende Schichten auf. Die Dekorlage weist so vorzugsweise eine Replizierlackschicht mit einer in die Replizierlackschicht abgeformten Oberflächenstruktur auf, beispielsweise eine diffraktive Oberflächenstruktur, eine Mikrolinsenstruktur, eine Mattstruktur oder ein symmetrisches oder asymmetrisches Blaze-Gitter. Eine Mikrolinsenstruktur kann dabei beispielsweise sphärische Linsen oder Zylinderlinsen beinhalten. Beispiele für solche Sicherheitselemente mit Mikrolinsenstruktur sind sogenannte Moire Magnifier. Weiter weist die Dekorlage vorzugsweise eine Reflexionsschicht auf, welche weiter bevorzugt musterförmig in Form einer ersten Information ausgeformt ist. Die Dekorlage weist weiter vorzugsweise eine Volumenhologrammschicht auf, in die ein Volumenhologramm eingeschrieben ist. Die Dekorlage weist weiter vorzugsweise ein Dünnfilmschichtelement zur Generierung eines blickwinkelabhängigen Farbverschiebungseffekts auf. Ein solches Dünnfilmschichtelement umfasst beispielsweise eine Absorptionsschicht, eine Distanzschicht und eine Reflexionsschicht, wobei die Distanzschicht eine Schichtdicke im Bereich λ/2 oder λ/4 einer Lichtwellenlänge λ eines Lichts im sichtbaren Frequenzbereich besitzt. Weiter ist es auch möglich, dass ein solches Dünnfilmschichtelement eine Abfolge von mehreren Schichten unterschiedlichen Brechungsindex umfasst, die jeweils die λ/2- bzw. λ/4-Bedingung erfüllen. Vorzugsweise weist die Dekorlage eine musterförmig in Form einer zweiten Information ausgeformte Farbschicht auf. Bei dieser Farbschicht handelt es sich vorzugsweise um eine opake Farbschicht oder um eine Farbschicht enthaltend optisch variable Pigmente, beispielsweise Dünnfilmschicht-Pigmente oder Flüssigkristall-Pigmente. Die Dekorlage kann weiter auch eine Flüssigkristallschicht aufweisen, vorzugsweise eine cholesterische Flüssigkristallschicht oder eine nematische Flüssigkristallschicht oder eine Kombination von cholesterischen und/oder nematischen Flüssigkristallschichten.

Weiter kann die Dekorlage auch zwei oder mehr Farbschichten oder eine beliebige Kombination der oben angeführten Schichten aufweisen

Im Folgenden wird die Erfindung anhand von mehreren Ausführungsbeispielen unter Zuhilfenahme der beiliegenden Zeichnungen beispielhaft erläutert.
- Fig. 1a: zeigt eine schematische Schnittdarstellung einer Grundfolie.
- Fig. 1b: zeigt eine schematische Draufsicht der Grundfolie nach Fig. 1a.
- Fig. 1c: zeigt eine schematische Draufsicht einer weiteren Ausführungsform einer Grundfolie.
- Fig. 2 bis Fig. 6: zeigen schematische Schnittdarstellungen zur Verdeutlichung der Verfahrensschritte des erfindungsgemäßen Verfahrens.
- Fig. 7 und Fig. 8: zeigen schematische Schnittdarstellungen zur Verdeutlichung der Verwendung einer erfindungsgemäßen Transferfolie.

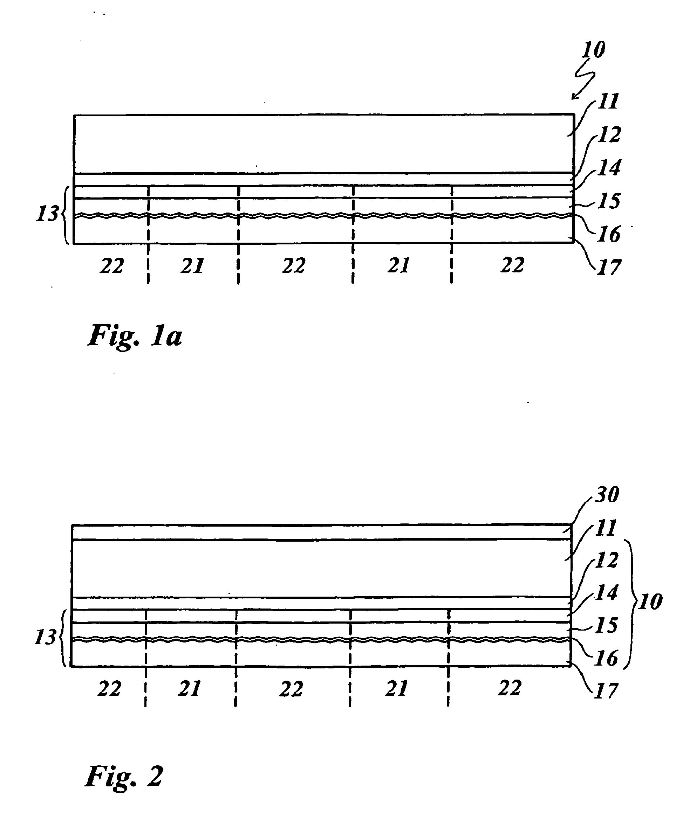

Fig. 1a zeigt eine Grundfolie 10 mit einer Trägerfolie 11, einer Ablöseschicht 12 und einer Dekorlage 13, welche eine Schutzlackschicht 14, eine Replizierlackschicht 15, eine Reflexionsschicht 16 und eine Kleberschicht 17 umfasst.

Bei der Trägerfolie 11 handelt es sich vorzugsweise um eine PET-, PEN- oder BOPP-Folie einer Stärke von 6 µm bis 125 µm. Auf der Trägerfolie 11 werden nun die Ablöseschicht und die Dekorlage nacheinander durch Aufbringen weiterer Schichten aufgebaut. Hierzu wird zuerst auf die Trägerfolie 11 die Ablöseschicht 12 aufgebracht. Die Ablöseschicht 12 besteht vorzugsweise aus einem wachsartigen Material, welches insbesondere durch die bei einem Heißprägevorgang auftretende Wärme erweicht wird und ein sicheres Trennen der Dekorlage von der Trägerfolie 11 ermöglicht. Die Dicke der Ablöseschicht beträgt vorzugsweise zwischen 0,01 µm bis 1,2 µm. Anschließend wird die Schutzlackschicht 14 in einer Schichtdicke zwischen 0,5 µm und 1,5 µm aufgebracht. Es ist hierbei auch möglich, dass die Schutzlackschicht 14 die Funktion der Ablöseschicht 12 übernimmt und demnach sowohl die Trennung der Dekorlage 13 von der Trägerfolie 11 ermöglicht als auch die Dekorlage 13 vor mechanischer Beeinflussung und Umwelteinflüssen schützt. Es ist hierbei auch möglich, dass die Schutzlackschicht 14 eingefärbt ist oder Mikro- und Nano-Partikel enthält.

Die Replizierlackschicht 15 besteht aus einem thermoplastischen Lack, in den mittels Hitze und Druck durch Einwirkung eines Prägewerkzeugs eine Oberflächenstruktur abgeformt ist. Weiter ist es auch möglich, dass die Replizierlackschicht 15 von einem UV-vernetzbaren Lack gebildet wird und die Oberflächenstruktur mittels UV-Replikation in die Replizierlackschicht 15 abgeformt wird.

Die Replizieriackschicht 15 besitzt vorzugsweise eine Schichtdicke zwischen 0,5 µm und 15 µm. Bei der in die Replizierlackschicht abgeformten Oberflächenstruktur handelt es sich vorzugsweise um eine diffraktive Oberflächenstruktur, beispielsweise um ein Hologramm, Kinegram^{®} oder um eine sonstige beugungsoptisch aktive Gitterstruktur. Solche Oberflächenstrukturen haben üblicherweise eine Beabstandung der Strukturelemente im Bereich von 0.1 µm bis 4 µm. Weiter ist es auch möglich, dass die Oberflächenstruktur eine makroskopische Oberflächenstruktur, beispielsweise ein Mikrolinsenfeld oder ein Blaze-Gitter ist.

Auf die Replizierlackschicht 15 wird nach Abformen des Oberflächenreliefs die Reflexionsschicht 16 aufgebracht. Bei der Reflexionsschicht 16 handelt es sich vorzugsweise um eine Metallschicht aus Chrom, Kupfer, Silber oder Gold oder einer Legierung solcher Metalle, die im Vakuum in einer Schichtdicke von 0,01 µm bis 0,04 µm aufgedampft wird. Weiter ist es auch möglich, dass die Reflexionsschicht 16 von einer transparenten Reflexionsschicht gebildet wird, beispielsweise einer dünnen oder fein strukturierten metallischen Schicht oder einer HRI- oder LRI-Schicht (HRI = High Refraction Index (Schicht mit hohem Brechungsindex); LRI = Low Refraction Index (Schicht mit niedrigem Brechungsindex)). Eine solche dielektrische Reflexionsschicht besteht beispielsweise aus einer aufgedampften Schicht aus einem Metalloxid, Metallsulfid, Titandioxid, etc. einer Dicke von 10 nm bis 50 nm.

Weiter ist es auch möglich, anstelle oder zusätzlich zu den Schichten 14 bis 16 in der Dekorlage noch weitere Schichten einzubringen, die einen optisch variablen Effekt generieren, beispielsweise ein Dünnfilmschichtsystem, eine Schicht aus einem vernetzten cholesterischen Flüssigkristall-Material oder eine Farbschicht. Weiter ist es auch möglich, dass die Dekorlage ein oder mehrere elektrisch leitfähige oder Halbleiter-Schichten umfasst, die eine elektrische Schaltung oder ein elektrisches Bauelement, beispielsweise einen RF-Resonanzkreis oder ein RFID-Tag realisieren. Dabei kann es sich beispielsweise um eine metallische Schicht handeln, die entweder aufgedampft oder aufgedruckt und anschließend durch galvanische Aufwachsung verstärkt wird. Insbesondere kann die Reflexionsschicht 16 gleichzeitig als elektrisch leitfähige Schicht dienen, die dafür ebenfalls galvanisch nachverstärkt werden kann. Weiter kann die Dekorschicht 13 ein oder mehrere Schichten aus einem magnetischen Material oder einem elektrolumineszenten Material umfassen.

Anschließend wird die Kleberschicht 17 in einer Schichtdicke von etwa 0,3 mm bis 0,5 µm aufgebracht. Die Kleberschicht 17 besteht vorzugsweise aus einem thermisch aktivierbaren Kleber und wird vollflächig beispielsweise mittels eines Rakels auf die Schicht 16 aufgebracht.

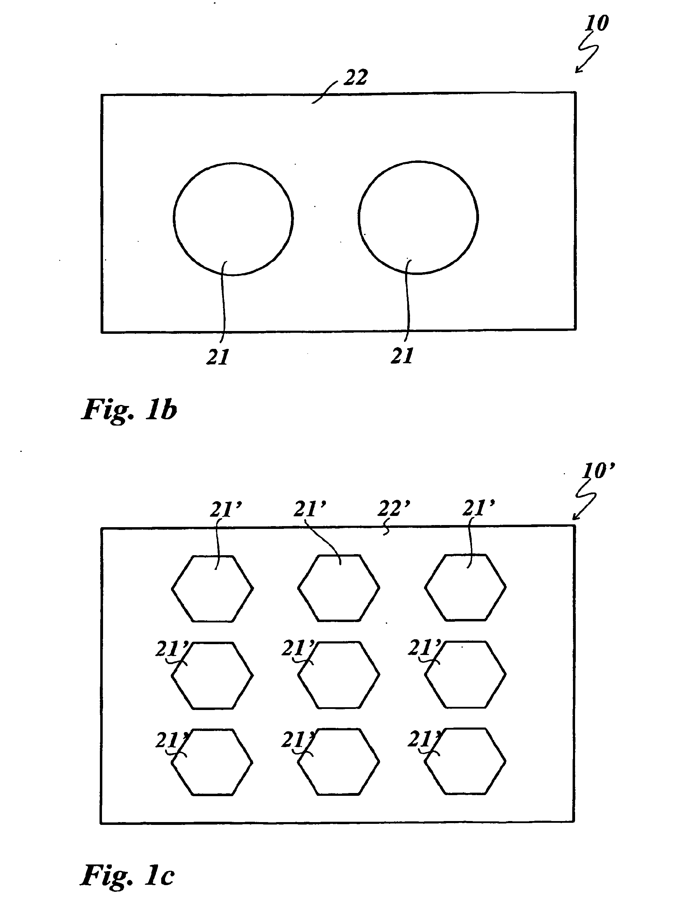

Wie in Fig. 1a und Fig. 1b angedeutet, weist die Grundfolie 10 und somit auch die Dekorlage 13 zwei erste Teilbereiche 21 und einen die ersten Teilbereiche 21 umschließenden zweiten Teilbereich 22 auf. Die ersten Teilbereiche stellen hierbei den Teil der Dekorlage dar, welcher als Sicherheitselement auf ein Zielsubstrat, beispielsweise ein Sicherheitsdokument, zu transferieren ist.

Vorzugsweise ist die in die Replizierlackschicht 15 abgeformte Reliefstruktur so gewählt, dass sie in den ersten Teilbereichen 21 eine vorgegebene optisch variable Information generiert. Die in den ersten Teilbereichen 21 abgeformte Oberflächenstruktur unterscheidet sich so vorzugsweise von der in dem Teilbereich 21 in die Replizierlackschicht 15 abgeformten Oberflächenstruktur. Weiter ist die Reflexionsschicht 16 musterförmig und partiell vorgesehen und stellt in den ersten Teilbereichen 21 eine zweite vordefinierte Information bereit. Vorzugsweise unterscheidet sich damit auch die musterförmige Ausgestaltung der Reflexionsschicht 16 in den ersten Teilbereichen 21 von der in dem zweiten Teilbereich 22. Vorzugsweise ist in dem zweiten Teilbereich 22 die Reflexionsschicht 16 nicht vorgesehen. Auch die optionalen weiteren optisch aktiven Schichten der Dekorlage 13 sind vorzugsweise registerhaltig zu den Teilbereichen 21 ausgeformt und stellen in den Teilbereichen 21 weitere Informationen bereit, so dass sich die Ausformung dieser Schicht ebenfalls in den ersten Teilbereichen 21 von der in dem zweiten Teilbereich 22 unterscheidet.

Weiter ist es auch möglich, dass eine Vielzahl erster Teilbereiche vorgesehen ist, die von einem durchgehenden, die ersten Teilbereiche umschließenden zweiten Teilbereich umschlossen sind. Dies ist beispielhaft in Fig. 1c gezeigt, in der eine Grundfolie 10' mit ersten Teilbereichen 21' und einem zweiten Teilbereich 22' dargestellt ist.

In einem in Fig. 2 verdeutlichten ersten Schritt wird auf die der Dekorlage 13 gegenüberliegende Seite der Trägerfolie 11 eine Kleberschicht 30 aufgebracht. Die Kleberschicht 30 wird hierbei vollflächig auf die Trägerfolie 11 aufgebracht. Weiter ist es auch möglich, dass die Kleberschicht 30 nur partiell auf die Trägerfolie 11 aufgebracht wird, beispielsweise in Form eines Punkt-Rasters, wie dies bereits oben beschrieben worden ist.

Bei der Kleberschicht 30 handelt es sich um einen UV-aktivierbaren Kleber. Der für die Kleberschicht 30 verwendbare Kleber hat beispielsweise folgende Zusammensetzung:

| | |
|---|---|
| Dicyclopentyloxyethyl Methacrylat | 50 - 60% |
| 2-Hydroxyethylmethacrylat | 8% |
| Trimethylolpropantriacrylat | 40 - 30% |
| (3-(2,3-Epoxypropoxy) propyl)trimethoxysilan | 1% |
| Irgacure 184 (CIBA) | 1 - 2 % |

Die Kleberschicht 30 wird in einer Schichtdicke von 0,1 µm bis 10 µm mittels eines Druckverfahrens, mittels Gießens oder mittels eines Rakels auf die Trägerfolie 11 aufgebracht.

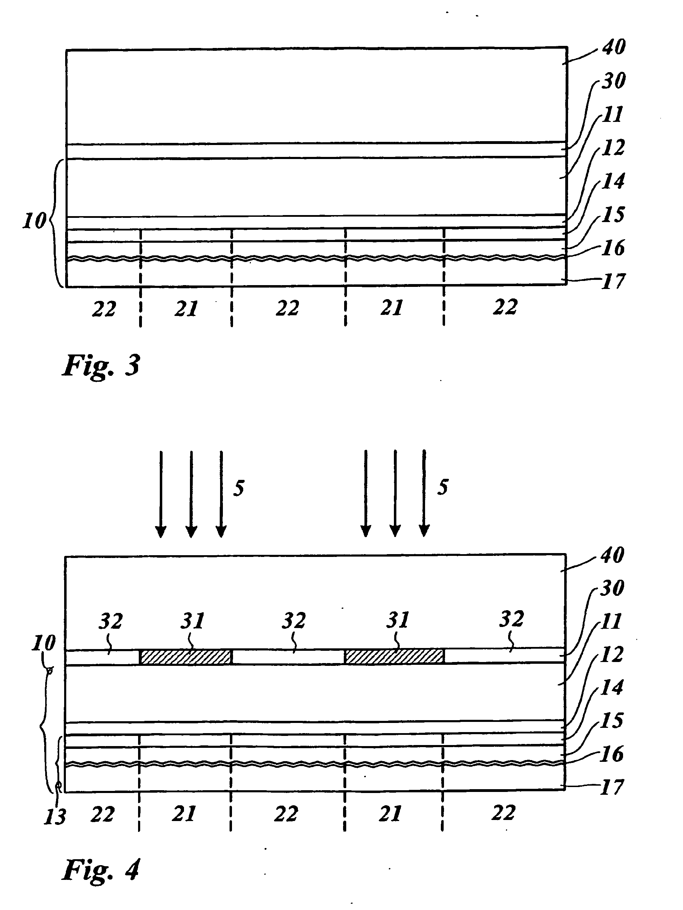

In einem zweiten, in Fig. 3 verdeutlichten zweiten Schritt wird auf die Kleberschicht 30 eine Trägerfolie 40 aufgebracht. Bei der Trägerfolie 40 handelt es sich um eine transparente Kunststofffolie, die vorzugsweise aus PET-, PVC-, PEN- oder BOPP-Folie besteht und eine Schichtdicke von 6 µm bis 250 µm besitzt.

In einem dritten, in Fig. 4 verdeutlichten Schritt wird ein erster Bereich der Kleberschicht 30 durch Belichtung aktiviert. Hierzu wird das in Fig. 4 gezeigte Foliengebilde bestehend aus der Trägerfolie 40, der Kleberschicht 30, der Trägerfolie 11, der Ablöseschicht 12 und der Dekorlage 13, im Bereich 31 mit UV-Licht 5 belichtet. Hierzu wird eine kollimierte Lichtquelle verwendet, die auf der der Trägerfolie 11 abgewandten Seite der Trägerfolie 40 und von der Trägerfolie 40 beabstandet ist. In dem Strahlengang zwischen der Lichtquelle und der Kleberschicht 30 ist hierbei eine Belichtungsmaske angeordnet, welche den Bereich 32 verdeckt und so eine selektive Belichtung des Bereichs 31 ermöglicht. Die Belichtungsquelle und die Belichtungsmaske sind vorzugsweise Teil eines Trommelbelichters, über den der in Fig. 4 gezeigte Folienkörper geführt wird. Wie in Fig. 4 gezeigt, ist die Belichtungsmaske hierbei so ausgeformt und angeordnet, dass der Bereich 31 die ersten Teilbereiche 21 weitgehend überdeckt und im Rahmen einer Registertoleranz von vorzugsweise 0,1 mm bis 2,0 mm zu den ersten Teilbereichen 21 positioniert ist.

In dem Bereich 32 wird die Kleberschicht 30 nicht durch UV-Licht belichtet und damit nicht aktiviert.

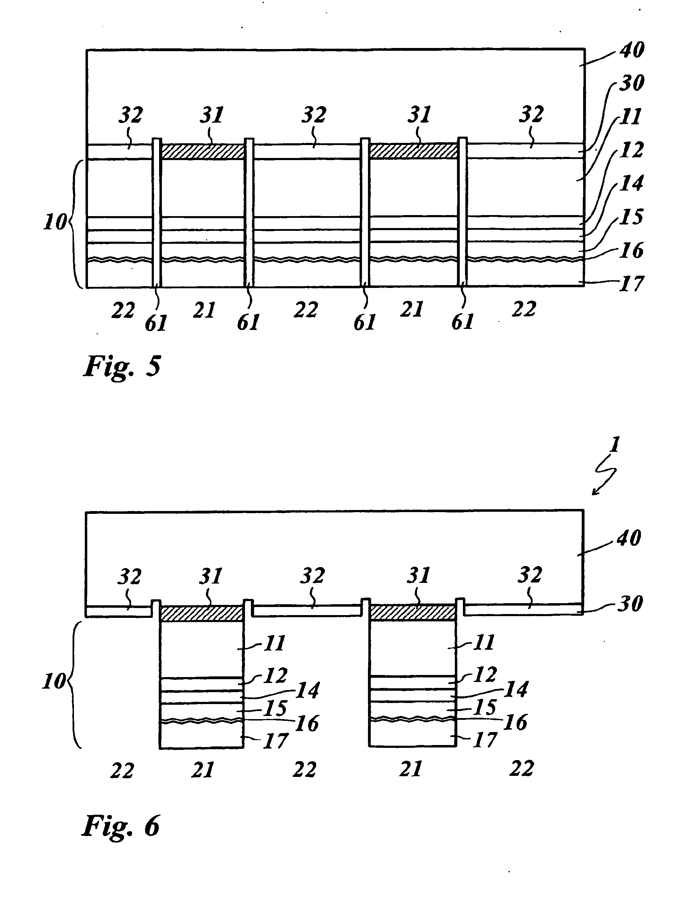

In einem in Fig. 5 verdeutlichten vierten Schritt wird die Dekorlage 13, die Ablöseschicht 12 und die Trägerfolie 11 entlang der die ersten Teilbereiche 21 definierenden und die ersten Teilbereiche 21 von dem Teilbereich 22 trennenden Grenzlinien durchtrennt. Die Durchtrennung dieser Schichten erfolgt vorzugsweise mittels einer Stanze, welche entsprechende Ausnehmungen 61 in den aus den Schichten 30 sowie 17 bis 11 bestehenden Folienkörper einbringt. Wie in Fig. 5 angedeutet, ist es hierbei auch möglich, dass die Stanztiefe so gewählt wird, dass auch die Trägerfolie 40 teilweise durchtrennt wird. Weiter ist es auch möglich, dass die Trägerfolie 11 nicht vollständig, sondern lediglich teilweise durchtrennt wird. Dies kann zum einen in der Form geschehen, dass sich entlang der Grenzlinie Bereiche abwechseln, in denen die Trägerfolie 11 vollständig durchtrennt oder nicht durchtrennt ist oder dass die Trägerfolie 11 nicht in ihrer gesamten Dicke, sondern lediglich beispielsweise in 80 % ihrer Dicke durchtrennt ist.

In einem fünften Schritt wird der den Teilbereich 22 umfassende Teil der Grundfolie 10 von der Trägerfolie 40 abgezogen, wobei aufgrund der in dem Bereich 31 aktivierten Kleberschicht 30 die Grundfolie in den ersten Teilbereichen 21 an der Trägerfolie 40 haften bleibt und auf der Trägerfolie 40 verbleibt. Nach Anziehen des "Gitters" ergibt sich damit der in Fig. 6 gezeigte Mehrschichtkörper 1, welcher als Sicherheitselement oder als Transferfolie zum Applizieren eines Sicherheitselements auf ein Zielsubstrat Verwendung finden kann. Wie in Fig. 6 dargestellt, verbleiben hierbei Reste des nicht aktivierten Materials der Kleberschicht 30 in dem Bereich 32 auf der Trägerfolie 40. Ggf. erfolgt eine Nachbelichtung der Folie

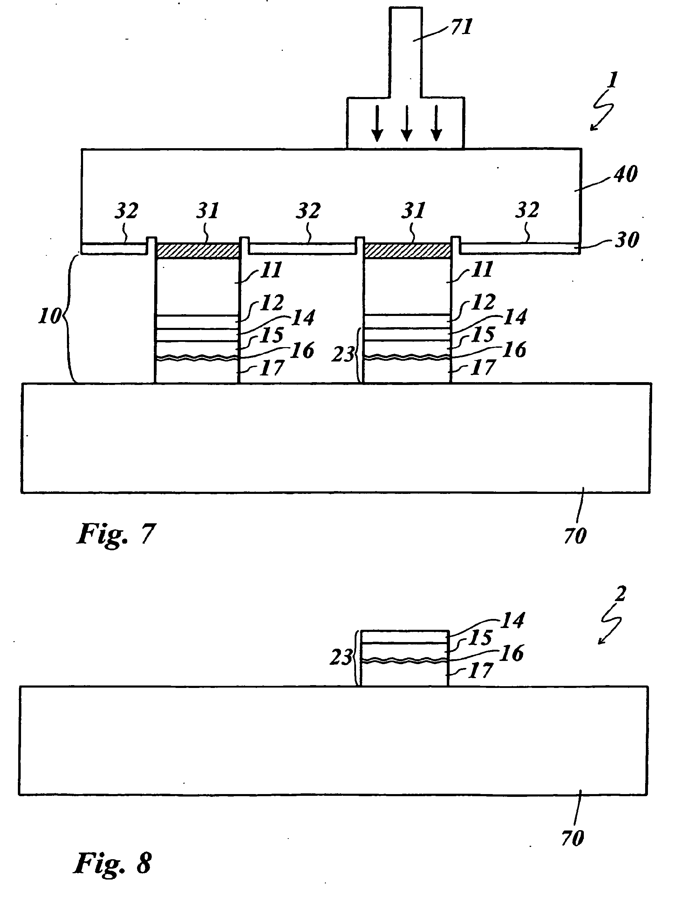

Wie anhand der Figuren Fig. 7 und Fig. 8 verdeutlicht, kann der Mehrschichtkörper 1 als Transferfolie zur Applizierung eines Sicherheitselements 23 auf ein Zielsubstrat 70 verwendet werden. Hierzu wird der Mehrschichtkörper 1 auf das Zielsubstrat 70 aufgelegt und die Kleberschicht 17 in einem ersten Teilbereich durch einen entsprechend geformten Heißprägestempel 71 aktiviert. Anschließend wird der Mehrschichtkörper umfassend die Trägerfolie 40, die Kleberschicht 30 und die Trägerfolie 11 von dem applizierten Bereich der Dekorlage 13 abgezogen, so dass das Sicherheitselement 23 auf dem Zielsubstrat 70 verbleibt, wie dies in Fig. 8 gezeigt ist.

## Patentansprüche

1. Verfahren zur Herstellung eines Sicherheitselements (1, 2), wobei bei dem Verfahren eine Grundfolie (10) bereit gestellt wird, die eine erste Trägerfolie (11) und eine ein- oder mehrschichtige Dekorlage (13) aufweist,
wobei auf eine Oberfläche der ersten Trägerfolie (11) eine erste Kleberschicht (30) aufgebracht wird und eine zweite Trägerfolie (40) aufgebracht wird derart, dass die erste Kleberschicht (30) zwischen der ersten Trägerfolie (11) und der zweiten Trägerfolie (40) angeordnet ist, dass die erste Kleberschicht (30) in einem ersten Bereich (31), der mindestens einen ersten Teilbereich (21) der Grundfolie (10) zumindest teilweise überdeckt, aktiviert wird und in einem an diesen Bereich (31) angrenzenden zweiten Bereich (32) die erste Kleberschicht (30) jedoch nicht aktivierte, nicht vorgesehen, lediglich teilweise vorgesehen oder deaktiviert wird, wobei die erste Trägerfolie (11) entlang der den mindestens einen ersten Teilbereich (21) definierenden und den mindestens einen ersten Teilbereich (21) von einem zweiten Teilbereich (22) der Grundfolie (10) trennenden Grenzlinie mindestens teilweise durchtrennt wird, und dass ein den zweiten Teilbereich (22) umfassender zweiter Teil der Grundfolie (10) von der zweiten Trägerfolie (40) abgezogen wird, wobei in dem mindestens einen ersten Teilbereich (21) die Grundfolie (10) aufgrund der aktivierten ersten Kleberschicht an der zweiten Trägerfolie (40) haftet und eine den mindestens einen ersten Teilbereich (21) umfassender erster Teil der Grundfolie (10) auf der zweiten Trägerfolie (40) verbleibt, **dadurch gekennzeichnet, dass** die Oberfläche der ersten Trägerfolie (11), auf der die erste Kleberschicht (30) aufgebracht wird, die von der Dekorlage (13) abgewandte Oberfläche ist.

2. Verfahren nach Anspruch 1,
**dadurch gekennzeichnet,**
**dass** als erste Kleberschicht (30) eine durch elektromagnetische Strahlung, insbesondere durch Bestrahlung mit UV-Licht aktivierbare Kleberschicht verwendet wird.

3. Verfahren nach Anspruch 2,
**dadurch gekennzeichnet,**
**dass** die erste Kleberschicht (30) nach Aufbringen der zweiten Trägerfolie (40) durch Bestrahlung im ersten Bereich (31) aktiviert wird und/oder dass die erste Kleberschicht (30) vor Aufbringen der zweiten Trägerfolie (40) im zweiten Bereich (32) deaktiviert wird.

4. Verfahren nach einem der Ansprüche 2 bis 3,
**dadurch gekennzeichnet,**
**dass** die erste Kleberschicht (30) durch die Dekorschicht bestrahlt wird und ein oder mehrere Schichten der Dekorschicht als Maskierungsschicht zur Steuerung der Bestrahlung der ersten Kleberschicht (30) ausgestaltet sind, wobei insbesondere eine opake, in dem ersten oder zweiten Bereich vorgesehene und in dem zweiten bzw. ersten Bereich nicht vorgesehene Schicht der Dekorschicht als Maskierungsschicht zur Steuerung der Bestrahlung der ersten Kleberschicht (30) verwendet wird.

5. Verfahren nach Anspruch 4,
**dadurch gekennzeichnet,**
**dass** in einem ersten Bestrahlungsschritt die erste Kleberschicht vor Aufbringen der zweiten Trägerfolie von einer in Richtung der von der ersten Trägerfolie abgewandten Seite der Dekorschicht angeordneten und von der Dekorschicht beabstandet angeordneten Strahlungsquelle durch die als Maskierungsschicht wirkende Dekorschicht bestrahlt wird und in dem zweiten Bereich deaktiviert wird, und in einem zweiten Bestrahlungsschritt die erste Kleberschicht nach Aufbringen der zweiten Trägerfolie von einer in Richtung der von der ersten Trägerfolie abgewandten Seite der zweiten Trägerfolie angeordneten und von der zweiten Trägerfolie beabstandet angeordneten Strahlungsquelle bestrahlt wird und in dem ersten Bereich aktiviert wird.

6. Verfahren nach Anspruch 1,
**dadurch gekennzeichnet,**
**dass** als erste Kleberschicht ein Heißkleber verwendet wird und die erste Kleberschicht mittels eines beheizten Prägestempels im ersten Bereich, jedoch nicht im zweiten Bereich vor Abziehen des zweiten Teils der Grundfolie aktiviert wird.

7. Verfahren nach einem der vorhergehenden Ansprüche,
**dadurch gekennzeichnet,**
**dass** die erste Kleberschicht im zweiten Bereich mittels Überdrucken mit einer Deaktivierungsschicht deaktiviert wird und/oder dass die erste Kleberschicht auf die erste und/oder zweite Trägerfolie im ersten Bereich, jedoch nicht im zweiten Bereich aufgedruckt wird.

8. Verfahren nach einem der vorhergehenden Ansprüche,
**dadurch gekennzeichnet,**
**dass** der von der Grundfolie, der zweiten Trägerfolie und der ersten Kleberschicht gebildete Folienkörper mittels einem Heißprägestempel bearbeitet wird, der gleichzeitig die erste Kleberschicht im ersten Bereich aktiviert und die erste Trägerfolie entlang der den mindestens einen ersten Teilbereich definierenden Grenzlinie mindestens teilweise durchstanzt.

9. Verfahren nach einem der vorhergehenden Ansprüche,
**dadurch gekennzeichnet,**
**dass** die Dekorlage Marken enthält und die Marken zur Bestimmung des ersten und zweiten Bereichs der ersten Kleberschicht und/oder zur Bestimmung des ersten und zweiten Teilbereichs der Grundfolie verwendet werden und dass das Durchtrennen der ersten Trägerfolie, die Aktivierung der ersten Kleberschicht, die Deaktivierung der ersten Kleberschicht und/oder das Aufbringen der ersten Kleberschicht mittels Erfassung der Marken gesteuert wird.

10. Verfahren nach einem der vorhergehenden Ansprüche,
**dadurch gekennzeichnet,**
**dass** nach Abziehen des zweiten Teils der Grundfolie (10) die verbleibende Folie (1) mit der zweiten Trägerfolie (40) und dem ersten Teil der Grundfolie (10) nachbestrahlt wird oder dass als erste Kleberschicht ein latent reaktiver Kleber verwendet wird und nach Abziehen des zweiten Teils der Grundfolie (10) die verbleibende Folie (1) mit der zweiten Trägerfolie (40) und dem ersten Teil der Grundfolie (10) eine definierte Zeit bei Raumtemperatur und/oder erhöhter Temperatur zur Aushärtung des latent reaktiven Klebers gelagert wird.

11. Verfahren nach einem der vorhergehenden Ansprüche,
**dadurch gekennzeichnet,**
**dass** nach Abziehen des zweiten Teils der Grundfolie (10) die verbleibende Folie mit der zweiten Trägerfolie (40) und dem ersten Teil der Grundfolie (10) auf ein Zielsubstrat (70) aufgelegt wird, ein oder mehrere erste Teilbereiche (21) der Grundfolie auf das Zielsubstrat (70) durch Aktivierung einer zwischen der Dekorlage (13) und dem Zielsubstrat (70) angeordneten Kleberschicht (17) appliziert werden und der Mehrschichtkörper umfassend die erste Trägerfolie (11), die erste Kleberschicht (30) und die zweite Trägerfolie (40) von der Dekorlage (13) der applizierten ein oder mehreren ersten Teilbereiche der Grundfolie abgezogen wird.

12. Verfahren nach Anspruch 8
**dadurch gekennzeichnet,**
**dass** für die erste Kleberschicht (30) und die zweite Kleberschicht (17) unterschiedliche Kleber verwendet werden.

13. Verfahren nach Anspruch 9, **dadurch gekennzeichnet, dass** als erste und zweite Kleberschicht Heißkleberschichten verwendet werden, die unterschiedliche Aktivierungstemperaturen besitzen, wobei die Aktivierungstemperatur der ersten Kleberschicht höher als die der zweiten Kleberschicht ist.

14. Transferfolie (1), insbesondere Heißprägefolie, zum Transfer eines oder mehrerer Mehrschichtkörper (23) auf ein Zielsubstrat (70), wobei die Transferfolie (1) eine Grundfolie (10) aufweist, welche eine erste Trägerfolie (11) und eine ein- oder mehrschichtige Dekorlage (13) aufweist,
wobei die Transferfolie (1) weiter eine zweite Trägerfolie (40) und eine auf eine Oberfläche der ersten Trägerfolie (11) aufgebrachte erste Kleberschicht (30) aufweist, wobei die erste Kleberschicht (30) zwischen der ersten Trägerfolie (11) und der zweiten Trägerfolie (40) angeordnet ist, wobei die erste Kleberschicht (30) in einem mindestens einen ersten Teilbereich (21) der Grundfolie zumindest teilweise überdeckenden ersten Bereich (31) aktiviert ist, so dass die Grundfolie (10) in dem mindestens einen ersten Teilbereich (21) an der zweiten Trägerfolie (40) haftet, und in einem an dem mindestens einen ersten Teilbereich (21) angrenzenden zweiten Teilbereich (22) jedoch nicht aktiviert, nicht vorgesehen, lediglich teilweise vorgesehen oder deaktiviert ist, und wobei die erste Trägerfolie (11) entlang der den mindestens einen ersten Teilbereich (21) definierenden und den mindestens einen ersten Teilbereich (21) von einem zweiten Teilbereich (22) der Grundfolie trennenden Grenzlinie durchtrennt und ein den zweiten Teilbereich (22) umfassender Teil der Grundfolie von der zweiten Trägerfolie (40) abgezogen ist,
**dadurch gekennzeichnet,**
**dass** die Oberfläche der ersten Trägerfolie (11), auf der die erste Kleberschicht (30) aufgebracht ist, die von der Dekorlage (13) abgewandte Oberfläche ist.

15. Transferfolie nach Anspruch 14,
**dadurch gekennzeichnet,**
**dass** die Transferfolie eine zweite Kleberschicht aufweist, die auf der von der zweiten Trägerfolie abgewandten Oberfläche der Dekorlage aufgebracht ist, und dass die durch die aktivierte erste Kleberschicht (30) zwischen der ersten Trägerfolie und der zweiten Trägerfolie bewirkte Klebekraft geringer als die zwischen der Dekorlage (13) und dem Zielsubstrat durch die aktivierte zweite Kleberschicht bewirkte Klebekraft ist.

16. Transferfolie (1) nach einem der Ansprüche 14 bis 15,
**dadurch gekennzeichnet,**
**dass** die Dekorlage (13) eine oder mehrere einen optisch variablen Effekt generierende Schichten (15, 16) aufweist, insbesondere die Dekorlage (13) eine Replizierlackschicht mit einer in die Replizierlackschicht abgeformten Oberflächenstruktur aufweist, insbesondere ausgewählt aus der Gruppe diffraktive Oberflächenstruktur, Linsenstruktur, Mattstruktur und Blaze-Gitter oder die Dekorlage ein Dünnfilmschichtelement zur Generierung eines blickwinkelabhängigen Farbverschiebungseffekts aufweist.

## Claims

1. Method for the production of a security element (1, 2) wherein in the method, a base film (10) is provided which has a first carrier film (11) and a single- or multi-layered decorative layer (13), wherein a first adhesive layer (30) is applied to a surface of the first carrier film (11) and a second carrier film (40) is applied in such a way that the first adhesive layer (30) is arranged between the first carrier film (11) and the second carrier film (40), wherein the first adhesive layer (30) is activated in a first region (31) which at least partially covers at least a first partial region (21) of the base film (10), and the first adhesive layer (30) is, however, not activated, is not provided, is only partially provided or is deactivated in a second region (32) adjacent to this region (31),wherein the first carrier film (11) is at least partially perforated along the boundary line which defines the at least one first partial region (21) and separates the at least one first partial region (21) from a second partial region (22) of the base film (10), and wherein a second part of the base film (10) comprising the second partial region (22) is removed from the second carrier film (40), wherein in the at least one first partial region (21), the base film (10) adheres to the second carrier film (40) due to the activated first adhesive layer and a first part of the base film (10) comprising the at least one first partial region (21) remains on the second carrier film (40),
**characterised in that** the surface of the first carrier film (11), on which the first adhesive layer (30) is applied, is the surface facing away from the decorative layer (13).

2. Method according to claim 1,
**characterised in that**
an adhesive layer that this able to be activated by electromagnetic radiation, in particular by irradiation with UV light, is used as a first adhesive layer (30).

3. Method according to claim 2,
**characterised in that**
the first adhesive layer (30) is activated in the first region (31) by irradiation, after applying the second carrier film (40) and/or that the first adhesive layer (30) is deactivated in the second region (32) before applying the second carrier film (40) .

4. Method according to one of claims 2 to 3,
**characterised in that**
the first adhesive layer (30) is irradiated through the decorative layer and one or more layers of the decorative layer are designed as a masking layer for the control of the irradiation of the first adhesive layer (30), wherein, in particular, an opaque layer of the decorative layer that is provided in the first or second region and is not provided in the second or first region is used as a masking layer for the control of the irradiation of the first adhesive layer (30).

5. Method according to claim 4,
**characterised in that**
in a first irradiation step, the first adhesive layer is irradiated through the decorative layer acting as a masking layer, before applying the second carrier film, by a radiation source arranged in the direction of the side of the decorative layer facing away from the first carrier film and arranged at a distance from the decorative layer, and is deactivated in the second region, and in a second irradiation step, the first adhesive layer is irradiated, after applying the second carrier film, by a radiation source arranged in the direction of the side of the second carrier film facing away from the first carrier film and arranged at a distance from the second carrier film, and is activated in the first region.

6. Method according to claim 1,
**characterised in that**
a hot glue is used as a first adhesive layer and, before removing the second part of the base film, the first adhesive layer is activated in the first region by means of a heated embossing stamp, however not in the second region.

7. Method according to one of the preceding claims,
**characterised in that**
the first adhesive layer is deactivated in the second region by means of overprinting with a deactivating layer and/or that the first adhesive layer is imprinted onto the first and/or second carrier film in the first region, however not in the second region.

8. Method according to one of the preceding claims,
**characterised in that**
the film body formed by the base film, the second carrier film and the first adhesive layer is processed by means of a hot embossing stamp which at the same time activates the first adhesive layer in the first region and is at least partially punched along the boundary line which defines the at least one first partial region.

9. Method according to one of the preceding claims,
**characterised in that**,
the decorative layer contains marks and the marks are used to determine the first and second region of the first adhesive layer and/or to determine the first and second partial region of the base film, and that the perforation of the first carrier film, the activation of the first adhesive layer, the deactivation of the first adhesive layer and/or the application of the first adhesive layer is controlled by means of detection of the marks.

10. Method according to one of the preceding claims,
**characterised in that**,
after removing the second part of the base film (10), the remaining film (1) having the second carrier film (40) and the first part of the base film (10) is irradiated or that a latently reactive glue is used as a first adhesive layer and, after removing the second part of the base film (10), the remaining film (1) having the second carrier film (40) and the first part of the base film (10) is stored for a defined time at room temperature and/or increased temperature to harden the latently reactive glue.

11. Method according to one of the preceding claims,
**characterised in that**,
after removing the second part of the base film (10), the remaining film having the second carrier film (40) and the first part of the base film (10) is applied to a target substrate (70), one or more first partial regions (21) of the base film are applied to the target substrate (70) by activation of an adhesive layer (17) arranged between the decorative layer (13) and the target substrate (70) and the multilayer body comprising the first carrier film (11), the first adhesive layer (30) and the second carrier film (40) is removed from the decorative layer (13) of the applied one or more first partial regions of the base film.

12. Method according to claim 8,
**characterised in that**,
different gluesare used for the first adhesive layer (30) and the second adhesive layer (17).

13. Method according to claim 9,
**characterised in that**
hot glue layers are used as first and second adhesive layers, which have different activation temperatures, wherein the activation temperature of the first adhesive layer is higher than that of the second adhesive layer.

14. Transfer film (1), in particular hot embossing film, to transfer one or more multilayer bodies (23) onto a target substrate (70), wherein the transfer film (1) has a base film (10), which has a first carrier film (11) and a single- or multi-layer decorative layer (13),
wherein the transfer film (1), furthermore, has a second carrier film (40) and a first adhesive layer (30) which is applied to a surface of the first carrier film (11), wherein the first adhesive layer (30) is arranged between the first carrier film (11) and the second carrier film (40), wherein the first adhesive layer (30) is activated in a first region (31) which at least partially covers at least one first partial region (21) of the base film such that the base film (10) adheres to the second carrier film (40) in the at least one first partial region (21), and is, however, not activated, not provided, only partially provided or deactivated in a second partial region (22) which is adjacent to the at least one first partial region (21), and wherein the first carrier film (11) is perforated along the boundary line which defines the at least one first partial region (21) and separates the at least one first partial region (21) from a second partial region (22), and a part of the base film which comprises the second partial region (22) is removed from the second carrier film (40),
**characterised in that**
the surface of the first carrier film (11), to which the first adhesive layer (30) is applied, is the surface facing away from the decorative layer (13).

15. Transfer film according to claim 14,
**characterised in that**,
the transfer film has a second adhesive layer, which is applied to the surface of the decorative layer facing away from the second carrier film, and that the adhesive force caused by the activated first adhesive layer (30) between the first carrier film and the second carrier film is smaller than the adhesive force caused by the activated second adhesive layer between the decorative layer (13) and the target substrate.

16. Transfer film (1) according to one of claims 14 to 15,
**characterised in that**,
the decorative layer (13) has one or more layers (15, 16) which generate an optically variable effect, in particular the decorative layer (13) has a replicating lacquer layer having a surface structure moulded into the replicating lacquer layer, in particular selected from the group of diffractive surface structure, lens structure, matt structure and blazed grating or the decorative layer has a thin film layer element to generate a colour shift effect that is dependent on the viewing angle.

## Revendications

1. Procédé servant à fabriquer un élément de sécurité (1, 2), sachant qu'un film de base (10) est fourni dans le cadre dudit procédé, lequel présente un premier film de support (11) et une couche décorative (13) monocouche ou multicouche,
sachant qu'une première couche adhésive (30) est appliquée sur une surface du premier film de support (11) et qu'un deuxième film de support (40) est appliqué de telle manière que la première couche adhésive (30) est disposée entre le premier film de support (11) et le deuxième film de support (40), sachant que la première couche adhésive (30) est activée dans une première zone (31) qui recouvre au moins en partie au moins une première zone partielle (21) du film de base (10) et que la première couche adhésive (30) n'est toutefois pas activée, n'est pas prévue, est prévue uniquement de manière partielle ou est désactivée dans une deuxième zone (32) jouxtant ladite zone (31),
sachant que le premier film de support (11) est séparé, au moins en partie le long de la ligne limite définissant la première zone partielle (21) au moins au nombre d'une et séparant la première zone partielle (21) au moins au nombre d'une, d'une deuxième zone partielle (22) du film de base (10), et sachant qu'une deuxième partie, incluant la deuxième zone partielle (22) du film de base (10), est retirée du deuxième film de support (40), sachant que le film de base (10) adhère au niveau du deuxième film de support (40) du fait de la première couche adhésive activée dans la première zone partielle (21) au moins au nombre d'une, et qu'une première partie incluant la première zone partielle (21) au moins au nombre d'une, du film de base (10) reste sur le deuxième film de support (40),
**caractérisé en ce que** la surface du premier film de support (11), sur laquelle la première couche adhésive (30) est appliquée, constitue la surface opposée à la couche décorative (13).

2. Procédé selon la revendication 1,
**caractérisé en ce que**
on utilise en tant que première couche adhésive (30) une couche adhésive pouvant être activée par un rayonnement électromagnétique, en particulier par une exposition à un rayonnement UV.

3. Procédé selon la revendication 2,
**caractérisé en ce que**
la première couche adhésive (30) est activée dans la première zone (31) par l'exposition à un rayonnement après l'application du deuxième film de support (40), et/ou **en ce que** la première couche adhésive (30) est désactivée dans la deuxième zone (32) avant l'application du deuxième film de support (40).

4. Procédé selon l'une quelconque des revendications 2 à 3,
**caractérisé en ce que**
la première couche adhésive (30) est exposée à un rayonnement par la couche décorative, et **en ce qu'**une couche ou plusieurs couches de la couche décorative sont réalisées sous la forme d'une couche de masquage servant à commander l'exposition au rayonnement de la première couche adhésive (30), sachant qu'on utilise, en particulier en tant que couche de masquage servant à commander l'exposition au rayonnement de la première couche adhésive (30), une couche opaque prévue dans la première zone ou dans la deuxième zone et non prévue dans la deuxième ou dans la première zone, de la couche décorative.

5. Procédé selon la revendication 4,
**caractérisé en ce que**
lors d'une première phase d'exposition au rayonnement, la première couche adhésive est exposée, avant l'application du deuxième film de support, au rayonnement d'une source de rayonnement disposée dans la direction du côté opposé au premier film de support de la couche décorative et disposée à distance de la couche décorative, à travers la couche décorative agissant sous la forme d'une couche de masquage, et est désactivée dans la deuxième zone, et **en ce que**, lors d'une deuxième phase d'exposition au rayonnement, la première couche adhésive est exposée, après l'application du deuxième film de support, au rayonnement d'une source de rayonnement disposée en direction du côté opposé du premier film de support du deuxième film de support et disposée à distance du deuxième film de support, et est activée dans la première zone.

6. Procédé selon la revendication 1,
**caractérisé en ce que**
on utilise en tant que première couche adhésive une colle chaude, et **en ce que** la première couche adhésive est activée au moyen d'un poinçon d'estampage chauffé dans la première zone, n'est toutefois pas activée dans la deuxième zone avant le retrait de la deuxième partie du film de base.

7. Procédé selon l'une quelconque des revendications précédentes,
**caractérisé en ce que**
la première couche adhésive est désactivée dans la deuxième zone, au moyen d'une surimpression, avec une couche de désactivation, et/ou **en ce que** la première couche adhésive est imprimée sur le premier et/ou le deuxième film de support dans la première zone, toutefois pas dans la deuxième zone.

8. Procédé selon l'une quelconque des revendications précédentes,
**caractérisé en ce que**
le corps de film formé par le film de base, le deuxième film de support et la première couche adhésive est usiné au moyen d'un poinçon d'estampage à chaud, lequel active la première couche adhésive dans la première zone et poinçonne dans le même temps au moins en partie le premier film de support le long de la ligne limite définissant la première zone partielle au moins au nombre d'une.

9. Procédé selon l'une quelconque des revendications précédentes,
**caractérisé en ce que**
la couche décorative comporte des marques, et **en ce qu'**on utilise les marques pour définir la première et la deuxième zone de la première couche adhésive et/ou pour définir la première et la deuxième zone partielle du film de base, et en ce la séparation du premier film de support, l'activation de la première couche adhésive, la désactivation de la première couche adhésive et/ou l'application de la première couche adhésive sont commandées au moyen de la détection des marques.

10. Procédé selon l'une quelconque des revendications précédentes,
**caractérisé en ce que**
que le film restant (1) avec le deuxième film de support (40) et la première partie du film de base (10) est exposé ultérieurement à un rayonnement après le retrait de la deuxième partie du film de base (10), ou en ce qu'on utilise en tant que première couche adhésive une colle réactive latente et **en ce que** le film restant (1) avec le deuxième film de support (40) et la première partie du film de base (10) est placé, un temps défini, à température ambiante et/ou à une température plus élevée aux fins du durcissement de la colle réactive latente après le retrait de la deuxième partie du film de base (10).

11. Procédé selon l'une quelconque des revendications précédentes,
**caractérisé en ce que**
le film restant avec le deuxième film de support (40) et la première partie du film de base (10) est posé, après le retrait de la deuxième partie du film de base (10), sur un substrat ciblé (70), **en ce qu'**on applique une ou plusieurs premières zones partielles (21) du film de base sur le substrat ciblé (70) en activant une couche adhésive (17) disposée entre la couche décorative (13) et le substrat ciblé (70), et **en ce qu'**on retire de la couche décorative (13) de la ou des plusieurs zones partielles appliquées du film de base le corps multicouche comprenant le premier film de support (11), la première couche adhésive (30) et le deuxième film de support (40).

12. Procédé selon la revendication 8,
**caractérisé en ce que**
on utilise des différentes colles pour la première couche adhésive (30) et la deuxième couche adhésive (17).

13. Procédé selon la revendication 9,
**caractérisé en ce que**
on utilise en tant que première et deuxième couche adhésive des couches de colle chaude qui présentent des températures d'activation différentes, sachant que la température d'activation de la première couche adhésive est plus élevée que la température d'activation de la deuxième couche adhésive.

14. Film de transfert (1), en particulier film d'estampage à chaud, servant au transfert d'un ou de plusieurs corps multicouches (23) sur un substrat ciblé (70), sachant que le film de transfert (1) présente un film de base (10), qui présente un premier film de support (11) et une couche décorative (13) monocouche ou multicouche,
sachant que le film de transfert (1) présente en outre un deuxième film de support (40) et une première couche adhésive (30) appliquée sur une surface du premier film de support (11), sachant que la première couche adhésive (30) est disposée entre le premier film de support (11) et le deuxième film de support (40), sachant que la première couche adhésive (30) est activée dans une première zone (31) recouvrant au moins en partie au moins une première zone partielle (21) du film de base, de sorte que le film de base (10) adhère au deuxième film de support (40) dans la première zone partielle (21) au moins au nombre d'une, et n'est toutefois pas activé, n'est pas prévu, ou est prévu au moins en partie ou est désactivé dans une deuxième zone partielle (22) jouxtant la première zone partielle (21) au moins au nombre d'une,
et sachant que le premier film de support (11) est séparé le long de la ligne limite définissant la première zone partielle (21) au moins au nombre d'une et séparant la première zone partielle (21) au moins au nombre d'une d'une deuxième zone partielle (22) du film de base, et sachant qu'une partie, incluant la deuxième zone partielle (22), du film de base est retirée du deuxième film de support (40),
**caractérisé en ce que**
la surface du premier film de support (11), sur laquelle est appliquée la première couche adhésive (30), constitue la surface opposée à la couche décorative (13).

15. Film de transfert selon la revendication 14,
**caractérisé en ce que**
le film de transfert présente une deuxième couche adhésive, qui est appliquée sur la surface, opposée au deuxième film de support, de la couche décorative,
et **en ce que** la force d'adhérence provoquée par la première couche adhésive (30) activée entre le premier film de support et le deuxième film de support est inférieure à la force d'adhérence provoquée entre la couche décorative (13) et le substrat ciblé par la deuxième couche adhésive activée.

16. Film de transfert (1) selon l'une quelconque des revendications 14 à 15,
**caractérisé en ce que**
la couche décorative (13) présente une ou plusieurs couches (15, 16) générant un effet à variation optique, en particulier **en ce que** la couche décorative (13) présente une couche de vernis de réplication pourvue d'une structure en surface formée dans la couche de vernis de réplication, en particulier choisie parmi le groupe comprenant la structure en surface diffractive, la structure de lentille, la structure mate et le réseau échelette, ou **en ce que** la couche décorative présente un élément à couche en film mince servant à générer un effet de décalage de couleur dépendant de l'angle d'observation.
